# EUROPEAN PATENT APPLICATION

(11) **EP 1 138 900 A2**
(43) Date of publication of application: **04.10.2001**
(21) Application number: 01106467.2
(22) Date of filing: 23.03.2001
(51) Int. Cl.: F02D 41/06, F01N 3/20, F02D 41/30, F02D 41/40, F02B 17/00, F02M 61/18, F02M 69/04

(54) **Cylinder injection type internal combustion engine and combustion control method at starting thereof**

(30) Priority: 30.03.2000 JP 2000097819
(71) Applicant: Hitachi, Ltd., Chiyoda-ku, Tokyo 101-8010 (JP)
(72) Inventor: Tokuyasu, Noburu, Hitachi, Ltd., Intell.Prop.Group, Chiyoda-ku, Tokyo 100-8220 (JP); Nogi, Toshiharu, Hitachi, Ltd., Intell.Prop.Group, Chiyoda-ku, Tokyo 100-8220 (JP); Shiraishi, Takuya, Hitachi Ltd.,Intell.Prop.Group, Chiyoda-ku, Tokyo 100-8220 (JP); Iihoshi, Youichi, Hitachi Ltd.,Intell.Prop.Group, Chiyoda-ku, Tokyo 100-8220 (JP); Ohsuga, Minoru, Hitachi Ltd.,Intell.Prop.Group, Chiyoda-ku, Tokyo 100-8220 (JP)
(74) Representative: Beetz & Partner Patentanwälte

(57) **Abstract**

A cylinder injection type internal combustion engine (1) includes a fuel injection valve (10, 160, 170) for directly injecting a fuel into a cylinder and a catalyst (13a, 13b) for cleaning up an exhaust in an exhaust gas and has at least two combustion control patterns for activating rapidly the catalyst (13a, 13b). The combustion control patterns are switched over based on a temperature of the catalyst (13a, 13b). Furthermore, a stratified combustion is provided at the time of starting by making a configuration of the combustion engine (1) optimum.

## Description

### BACKGROUND OF THE INVENTION

The present invention relates to a method for activating a catalyst rapidly when a cylinder injection type internal combustion engine, in which fuel is directly injected into a combustion chamber, is started.

As regulations to exhaust gas and fuel efficiency are strengthened, there has been proposed techniques for activating a catalyst rapidly at the time of starting an engine. In particular, as a technique for a cylinder injection type internal combustion engine, the following techniques are proposed.

A conventional technique for activating a catalyst rapidly in the cylinder injection type internal combustion engine is disclosed in JP-A-8-100638 specification. According to this technique, additional fuel injection occurs within a period from an early stage to a middle stage in an expansion stroke, and flame propagation from the main combustion causes the added fuel to be ignited to rise the exhaust gas temperature, thereby warming up the catalyst.

Besides, another method is proposed in JP-A-11-294157 specification, in which additional fuel is injected during the expansion stroke, the exhaust gas dwells in a volume portion provided in an exhaust manifold, and unburned additional fuel is re-combusted in the volume portion, thereby rising the exhaust gas temperature with reduced unburned HC to warm up the catalyst.

By the way, in case of injecting the additional fuel within the period from the early stage to the middle stage in the expansion stroke, the additionally injected fuel is discharged from the combustion chamber while being burned. If the additional fuel injection occurs near a TDC, that is, during the early stage in the expansion stroke, the unburned HC discharged from the combustion chamber tends to be reduced. Accordingly, the exhaust gas temperature becomes high. In such a case, however, the added fuel is ignited immediately after being ejected from a fuel injection valve and is burned by taking in oxygen, so that a large amount of smoke is produced. Besides, in case of injecting the additional fuel during the middle stage in the expansion stroke, there remains no flame due to the main combustion, and therefore it is difficult to surely ignite and burn the added fuel. As a result, the unburned HC is increased and the exhaust gas temperature is insufficiently risen, so that the time required to activate the catalyst is increased. On the other hand, with the method in which additional fuel is injected during the expansion stroke, and unburned additional fuel is re-combusted in the volume portion provided in the exhaust manifold, it is possible to reduce the unburned HC and supply the exhaust gas at high temperature to the catalyst. In this method, however, even if the remaining oxygen and unburned HC exist in a sufficient amount, the re-combustion does not occur in the volume portion when the temperature in the volume portion does not reach a predetermined value. That is, it takes a certain amount of time for the volume portion to reach the predetermined temperature, and the unburned HC discharged from the combustion chamber during the time period is emitted as-is into the atmosphere.

### SUMMARY OF THE INVENTION

The present invention is provided in view of the above-mentioned problems. It is an object of the present invention to reduce the unburned HC until a catalyst is activated and to further reduce the time required for activating the catalyst.

In order to achieve the object, the cylinder injection type internal combustion engine and the combustion control method at starting thereof according to the present invention essentially comprise a fuel injection valve for directly injecting fuel into a cylinder, and a catalyst to be activated by an HC component exhausted into an exhaust pipe. The engine and the method are characterized in that there are at least two combustion control patterns for activating rapidly the catalyst, and the combustion control patterns are switched over in dependence upon the temperature of the catalyst.

Furthermore, it is also proposed to control the combustion in dependence upon a cooling water temperature, and the engine preferably comprises means for selecting the combustion control method on the basis of the water temperature, and if the water temperature is lower than a predetermined value, the fuel injection for the main combustion occurs during an intake stroke, and if the water temperature is higher than the predetermined value, the fuel injection for the main combustion occurs during a compression stroke.

Furthermore, it is preferable that the fuel injection occurs during the compression stroke, that is, stratified combustion is conducted at the time of starting.

An aspect of the present invention is characterized in that the cylinder injection type internal combustion engine, which comprises a fuel injection valve for directly injecting fuel into a cylinder and a catalyst to be activated by an HC component in the exhaust gas, has at least two combustion control patterns for activating rapidly the catalyst, and implements a second combustion control pattern when the temperature of the catalyst reaches a predetermined value, the second combustion control pattern being a double injections control for injecting the fuel during the compression stroke and during the expansion stroke.

In the above-mentioned aspect, it is preferable that in response to the operation conditions, a first fuel injection occurs during the compression stroke, a second fuel injection occurs during the early stage in the expansion stroke, and after the temperature of the catalyst reaches the predetermined value, the second fuel injection occurs during the middle stage in the expansion stroke or later.

In the above-mentioned aspect, it is preferable that the fuel injection valve capable of separately controlling and injecting the air and the fuel is employed.

In the above-mentioned aspect, it is preferable that the fuel injection valve capable of producing a fuel spray which is resistant to deformation caused by pressure changes in the cylinder is employed.

In the above-mentioned aspect, it is preferable that, in the double injections before the temperature of the catalyst reaches the predetermined value, the fuel is injected into the cylinder by dividing the second fuel injection into a plurality of injections.

In the above-mentioned aspect, it is preferable that, in the double injections control before the temperature of the catalyst reaches the predetermined value, an amount of the additional fuel is changed in dependence on the concentration of oxygen in the exhaust gas.

With such configuration and combustion control method, the unburned HC discharged at the time of starting can be reduced, as well as the time required for activating the catalyst can be reduced.

### BRIEF DESCRIPTION OF THE DRAWINGS

Fig. 1 is a schematic perspective view of a cylinder injection type internal combustion engine according to an embodiment of the present invention;
Fig. 2 is a diagram showing a system configuration of a cylinder injection type internal combustion engine according to an embodiment of the present invention;
Fig. 3 is a graph schematically showing a combustion control method at the time of starting according to an embodiment of the present invention;
Fig. 4 is a graph showing a relation between the temperature of a catalyst and a clean-up rate;
Fig. 5 is a flowchart of a control method according to an embodiment of the present invention;
Fig. 6 is a graph schematically showing a combustion control method taking into account the water temperature at the time of starting according to an embodiment of the present invention;
Fig. 7 is an illustration showing a method for controlling fuel injection according to a typical embodiment of the present invention;
Fig. 8 is an illustration showing a combustion mechanism in case of injecting two times during a compression stroke and an early stage in an expansion stroke;
Fig. 9 is a graph showing characteristics of an exhaust gas temperature, unburned HC, and smoke for varied timing of the second fuel injection according to an embodiment of the present invention;
Fig. 10 is an illustration showing an optimum status of the second injected fuel injected during the early stage in the expansion stroke according to an embodiment of the present invention;
Fig. 11 is an illustration showing an example of the fuel injection method in which the second fuel injection occurs during the early stage in the expansion stroke according to an embodiment of the present invention;
Fig. 12 is a graph showing a relation between the concentration of oxygen in the exhaust gas and the pulse width of the second fuel injection according to an embodiment of the present invention;
Fig. 13 is a schematic perspective view of an optimum cylinder injection type internal combustion engine according to an embodiment of the present invention;
Fig. 14 is a graph showing amounts of the unburned HC exhausted from a combustion chamber in cases of uniform combustion and stratified combustion at the time of starting, respectively;
Fig. 15 is a time chart illustrating another embodiment of the present invention;
Fig. 16 is a cross-sectional view showing an example of an air-assisted type fuel injection valve;
Fig. 17A is a diagram showing a system with the injection valve which is less susceptible to pressure changes;
Fig. 17B is a cross-sectional view of the injection valve showing a status of a fuel spray; and
Fig. 17C is a cross-sectional view of the injection valve showing main parts thereof.

### DESCRIPTION OF THE PREFERRED EMBODIMENTS

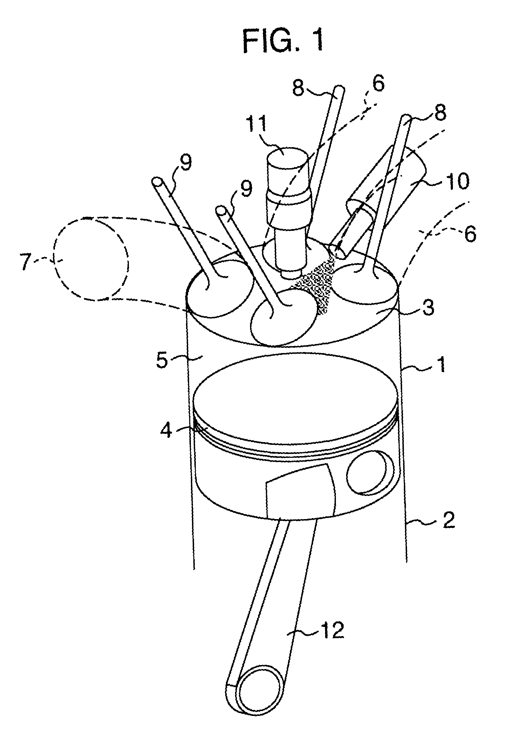

Embodiments of the present invention will be described hereinafter with reference to the drawings. Fig. 1 is a schematic perspective view of a cylinder injection type internal combustion engine according to an embodiment of the present invention, in which each cylinder of an internal combustion engine 1 is defined by a cylinder block 2 located at a lower portion of the engine and a cylinder head 3 located above the cylinder block 2.

A piston 4 is arranged in the cylinder for slide movement upward and downward, and a space is provided above the piston 4 for a combustion chamber 5. The cylinder head 3 has a form of a pent-roof, to which two intake pipes 6 and two exhaust pipes 7 open to the combustion chamber 5 are connected. The intake pipes 6 have their respective intake valves 8 arranged at the connections to the cylinder head 3, and the exhaust pipes 7 have their respective exhaust valves 9 arranged at the connections to the cylinder head 3. Although the piston 4 is shown to have a flat top face as a typical example, the present invention is not limited thereto.

On the side surface in the vicinity of the intake valve 8 of the combustion chamber, a fuel injection valve 10 for directly injecting the fuel into the cylinder of the engine is disposed, which is positioned with its nozzle hole directed toward the combustion chamber 5. The fuel injection valve 10 is a high-pressure swirl type fuel injection valve whose nozzle hole has a configuration that gives the sprayed fuel a swirling force to form a conical-shaped spray with a predetermined spray angle. At a center of a ceiling of the cylinder head 3, an ignition plug 11 is disposed.

The intake valves 8 and exhaust valves 9 are moved upward and downward by a camshaft (not shown) disposed at an upper portion of the cylinder head 3, and open and close communicating valve holes of the intake valves 6 and exhaust valves 7 provided on the cylinder head 3. The piston 4 is linked with a crankshaft (not shown), which is rotatably supported at the lower portion of the cylinder block 2, via a connecting rod 12, and rotationally drives the crankshaft as the engine operates to move the piston 4 upward and downward in the cylinder.

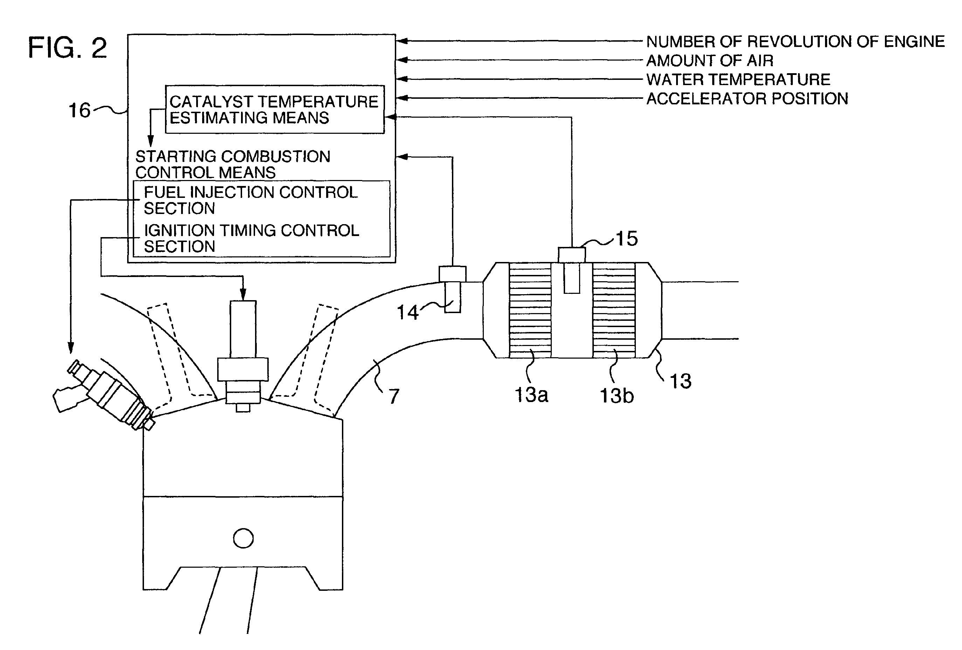

Fig. 2 is a diagram showing a system configuration of a cylinder injection type internal combustion engine according to an embodiment of the present invention. In the cylinder injection type internal combustion engine having the configuration described with reference to Fig. 1, an exhaust emission control device 13 is provided on the downstream side of the exhaust pipe 7, and an oxygen concentration sensor 14 for detecting the concentration of oxygen in the exhaust gas is provided in the exhaust pipe 7 on the upstream side of the exhaust emission control device. A catalyst temperature sensor 15 is provided in the exhaust emission control device 13. A three way catalyst 13a and NOx catalyst 13b are provided in the exhaust emission control device 13. Alternatively, for a configuration in which the three way catalyst 13a and NOx catalyst 13b are provided separately, exhaust gas temperature sensors may be provided in the exhaust pipes 7 on the upstream side and downstream side of the three way catalyst 13a and NOx catalyst 13b, and the temperatures of the catalysts may be estimated on the basis of the exhaust gas temperatures detected before and after the respective catalysts.

An ECU 16, to which a number of revolution of the engine, air quantity, water temperature, and accelerator position are inputted, comprises means for estimating catalyst temperature and means for controlling combustion at the time of starting, in particular, a fuel injection control section and an ignition timing control section. The fuel injection control section comprises a main fuel injection control section for providing an engine power and an additional fuel injection control section for activating the catalysts 13a and 13b, and the timing for injecting fuel and amount of the injected fuel is set in response to the operation conditions.

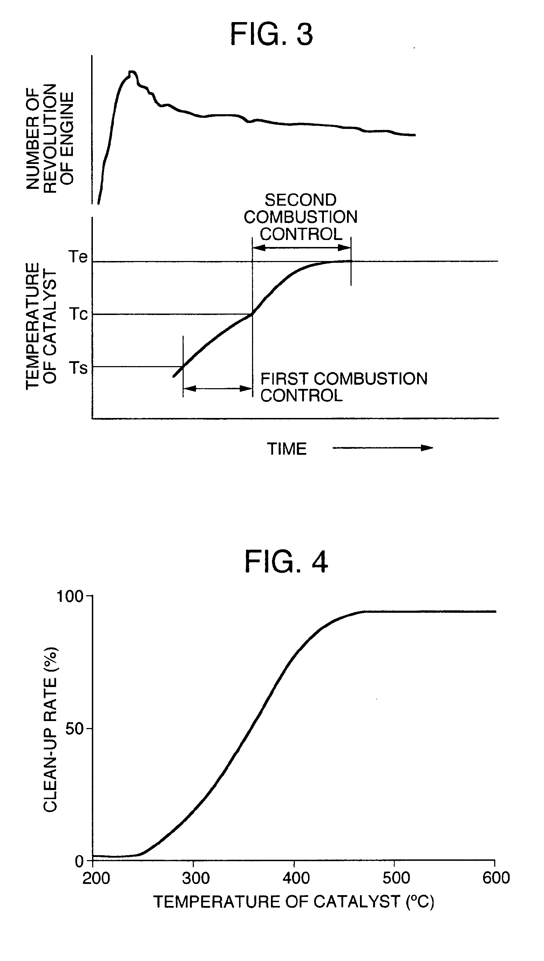

A combustion control method at the time of starting according to an embodiment of the present invention will be described with reference to Fig. 3. After the engine starts, when the temperature of the catalyst reaches a predetermined temperature Ts, a first combustion control for activating the catalyst occurs. During the first combustion control, since the catalyst is insufficiently activated, the combustion must occur in such a manner that the unburned HC is not exhausted from the combustion chamber as much as possible. When the temperature of the catalyst is further raised and reaches a lower limit value Tc (about 250°C - 300°C) of an active catalyst region, the control is switched to a second combustion control. When the temperature of the catalyst becomes equal to or higher than Tc, the unburned HC exhausted from the combustion chamber begins reaction in the catalyst. As a matter of course, it is essentially required to include residual oxygen enough for burning the unburned HC in the exhaust gas, and the requirement may be met by adopting the stratified combustion for the main combustion to intake enough air into the cylinder. The second combustion control is terminated when the temperature of the catalyst reaches an upper limit value Te of the active catalyst region. The relation between the temperature of the catalyst and the clean-up rate is shown in Fig. 4. When the temperature of the catalyst ranges between about 200°C and 250°C, the clean-up rate is almost 0, and it is difficult to clean up the unburned HC. In other words, the important point to reduce the catalyst activation time is to raise the temperature of the catalyst to 200°C to 250°C or more as fast as possible while reducing the unburned HC to be exhausted from the engine. Since the clean-up rate approaches 100% when the temperature of the catalyst becomes about 500°C, Te is desirably set at about 500°C. The first combustion control may be started on the basis of a timer operated after starting rather than on the temperature of the catalyst.

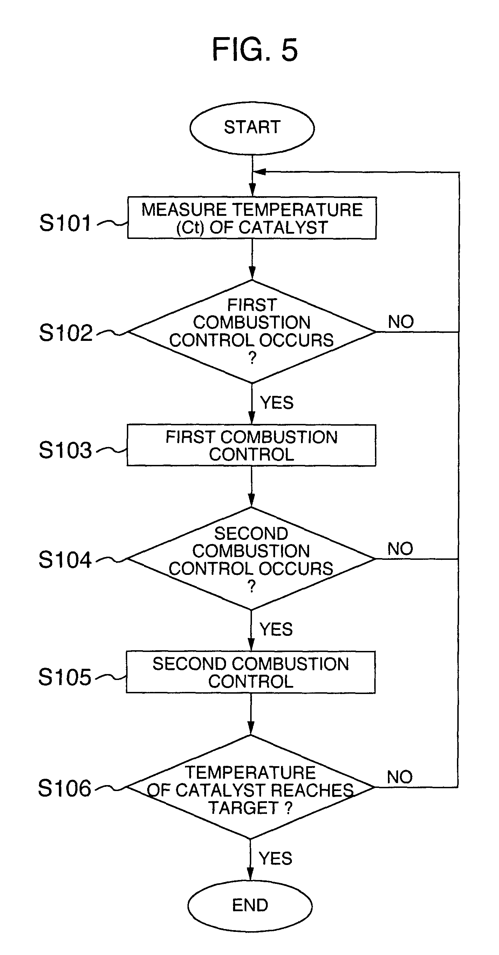

Fig. 5 shows a flowchart of a control according to the embodiment of the present invention. First, in step 101, the temperature of the catalyst Ct is measured with the catalyst temperature sensor 15 provided in the exhaust pipe. If it is determined that Ct < Ts in step 102, the first combustion control does not occur, and the temperature of the catalyst Ct is measured again in step 101. After repetition of the above operation, when the temperature of the catalyst Ct becomes equal to or more than Ts (Ct ≥ Ts), the first combustion control is started in step 103. The first combustion control continues until it is determined that the temperature of the catalyst Ct becomes equal to or more than Tc (Ct ≥ Tc) in step 104. Then, if the relation of the temperature of the catalyst Ct ≥ Tc is established in step 104, the second combustion control is started in step 105. The second combustion control continues in step 105 until it is determined that the temperature of the catalyst Ct becomes equal to or more than Tc (Ct ≥ Te). Then, if it is determined that the temperature of the catalyst Ct becomes equal to or more than Te (Ct ≥ Te) in step 106, the combustion control of the present invention is terminated.

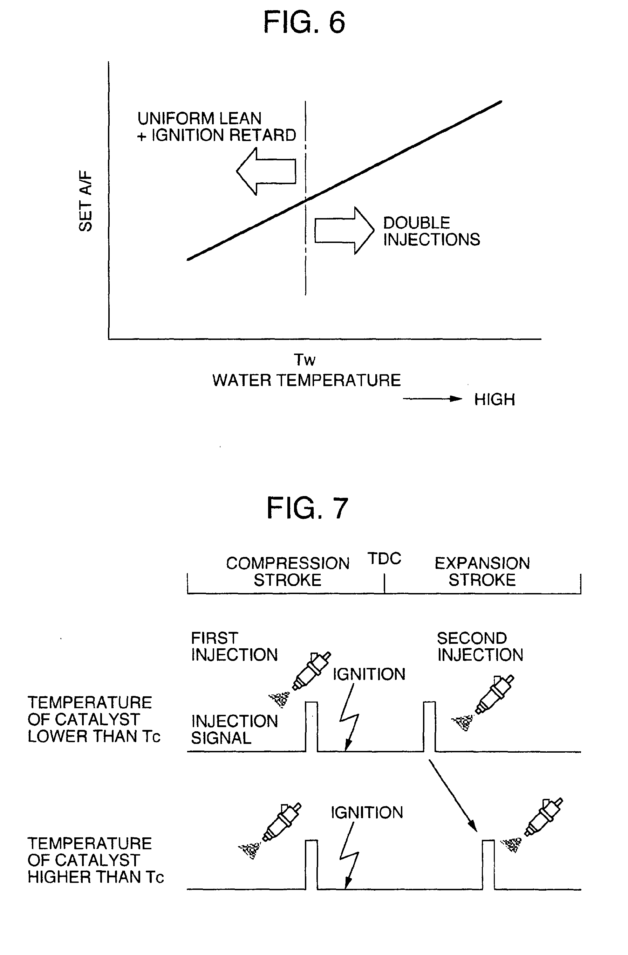

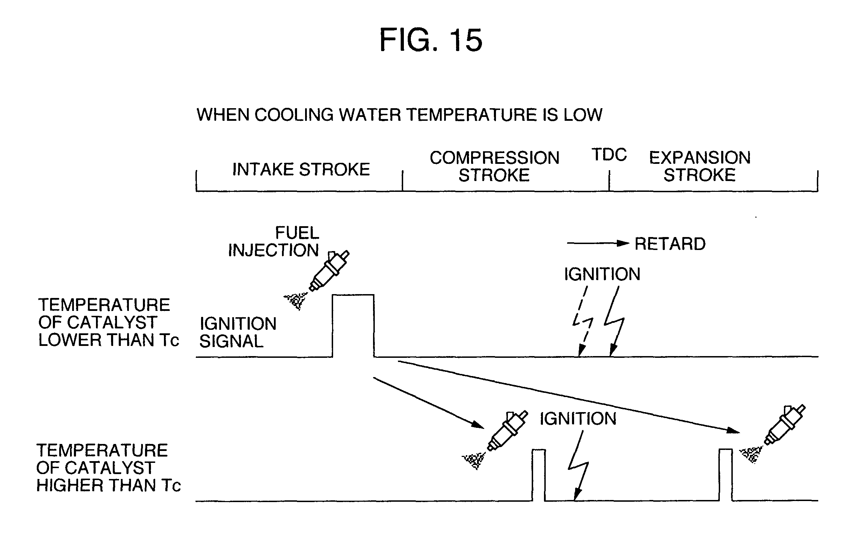

By the way, generally in the stratified combustion in the cylinder injection type internal combustion engine, the fuel is injected toward a cavity provided above the top face of the piston, and the injected fuel is guided by the cavity and carried to the ignition plug. In such a concept, since the fuel is impinged on the piston, the fuel is adhered to the top face of the piston in the form of a liquid film. At the time of starting, in particular, since the temperatures of the piston and a wall of the combustion chamber are low, the fuel adhered to the wall is insufficiently evaporated, thereby giving rise to a problem that an stable combustion region is reduced. According to the present invention, in order to solve such a problem, it is provided that the first combustion control pattern is selected in accordance with the water temperature at the time of starting as shown in Fig. 6. If the water temperature at the time of starting is equal to or higher than Tw (within a stratified combustion possible region), for the first combustion control pattern, the first fuel injection occurs during the compression stroke and the second fuel injection (injection of the additional fuel) occurs during the expansion stroke to raise the exhaust gas temperature by the afterburning of the additional fuel, thereby raising the temperature of the catalyst. On the other hand, if the water temperature at the time of starting is lower than Tw, the first fuel injection occurs during the intake stroke as shown in Fig. 15, and the ignition timing in addition to the uniform lean burn is retarded so as to approach the TDC, thereby providing the same effect.

Next, the case in which the water temperature at the time of starting is equal to or higher than Tw will be described in detail.

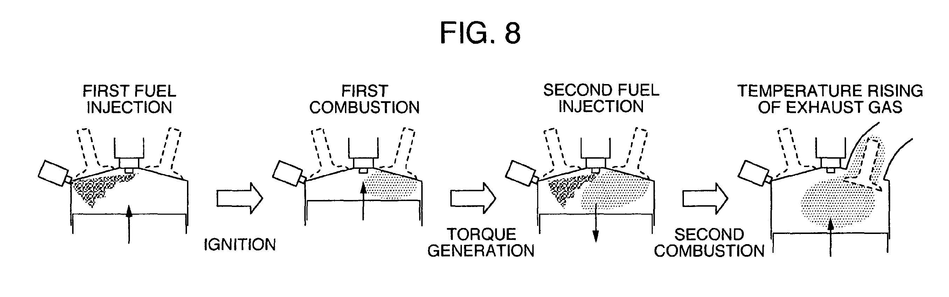

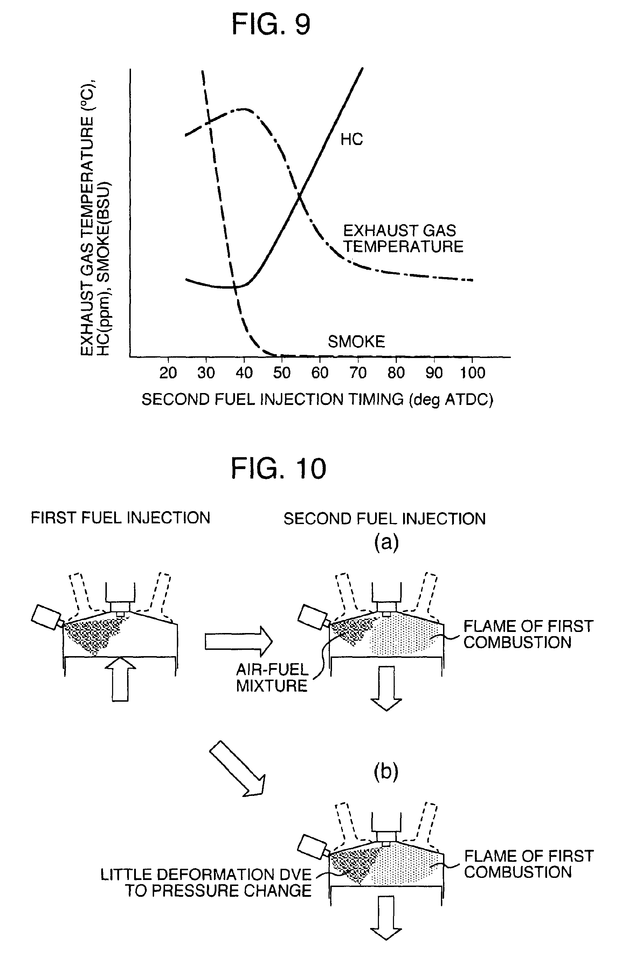

A method for controlling fuel injection according to a typical embodiment of the present invention is shown in Fig. 7. According to this embodiment, the first fuel injection occurs during the compression stroke in both cases where the temperature of the catalyst is higher and lower than Tc, and the subsequent second fuel injection occurs during the early stage in the expansion stroke until the temperature of the catalyst reaches Tc, and occurs during the middle stage in the expansion stroke or later after the temperature of the catalyst reaches Tc. For the first combustion control, a combustion mechanism will be described with reference to Fig. 8 in which the first fuel injection occurs during the compression stroke, and the second fuel injection occurs during the early stage in the expansion stroke. The first fuel injected during the compression stroke burns by the subsequent ignition. The second fuel injected during the early stage in the expansion stroke is ignited by the flame propagation of the first combustion. Therefore, the temperature of the interior of the combustion chamber is extremely high when the second fuel injection occurs, so that the second injected fuel is insufficiently mixed with the residual oxygen in the combustion chamber and burns while taking in oxygen immediately after the injection. This is referred to as a diffusion combustion, and in such a combustion, a large amount of smoke is produced due to incomplete oxidation. Characteristics of the exhaust gas temperature, unburned HC, and smoke for varied timing of the second fuel injection are shown in Fig. 9. As the injection timing is delayed from 40 degATDC, the exhaust gas temperature is continuously reduced, and the unburned HC is continuously increased. Around 70 degATDC, there remains no flame of the main combustion, so that it is considered that the second injected fuel is difficult to be ignited. In addition, the smoke is rapidly increased before 40 degATDC.

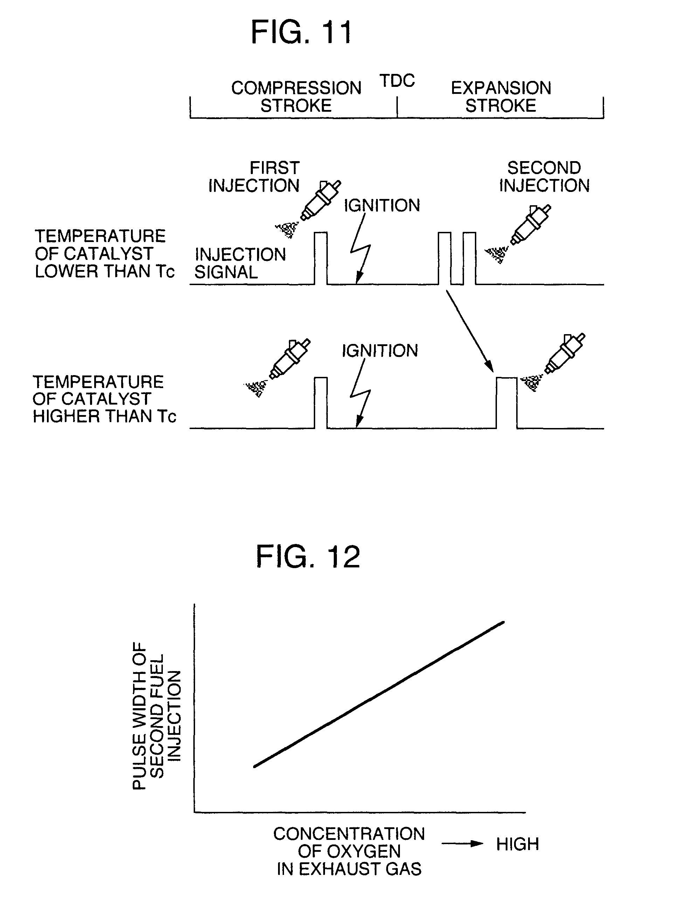

Therefore, according to this embodiment, a specific improvement for raising the exhaust gas temperature while attaining the reduction of the unburned HC and smoke, which is the object of the present invention, is provided. The improvement will be described with reference to Figs. 10 and 11.

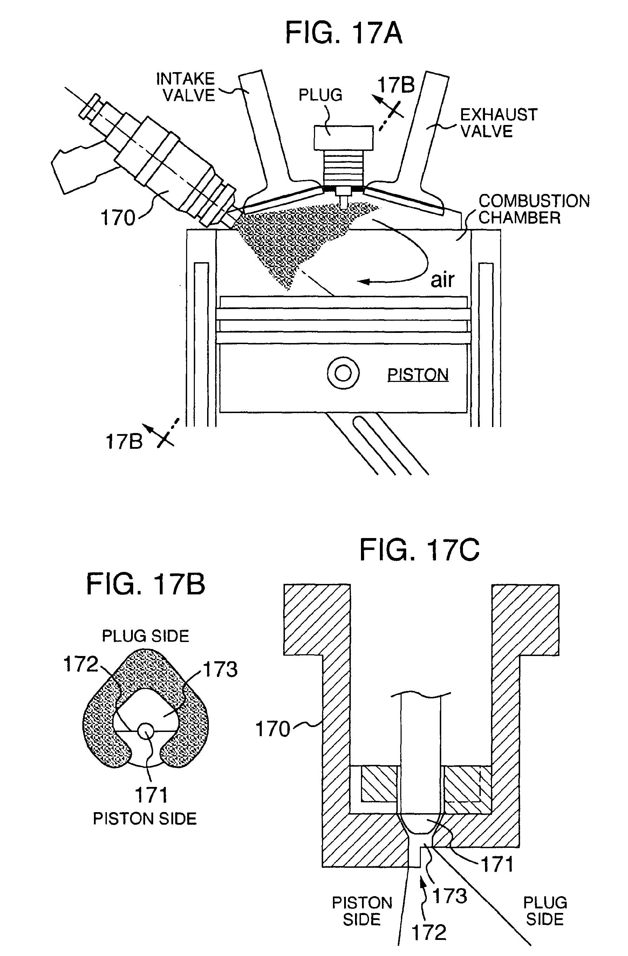

Fig. 10 is an illustration showing an optimum status of the second injected fuel injected during the early stage in the expansion stroke. (a) in Fig. 10 shows the case where a fuel injection valve capable of controlling the air and fuel separately is applied. The first fuel is injected during the compression stroke, and an air-fuel mixture concentratedly formed around the ignition plug is ignited by the ignition plug. The first fuel mentioned here may be the fuel only or mixture of the air and fuel. The application of the above-described fuel injection valve becomes effective in the second fuel injection. Since the second injected fuel which is injected during the early stage in the expansion stroke can be supplied to the combustion chamber in the form of the air and fuel mixed in advance, the combustion by the second injected fuel can be a premixed combustion. That is, the smoke, which is the problem, can be considerably reduced, as well as the unburned HC to be exhausted from the combustion chamber can also be reduced by making the timing of the second injection optimum. Therefore, even if the second fuel injection occurs during the early stage in the expansion stroke, the catalyst can be activated by the temperature rising of the exhaust gas while reducing the unburned HC and smoke. Main parts of an example of such a fuel injection valve 160 are shown in Fig. 16. The injection valve 160 comprises a nozzle hole 163 located downstream from a valve element 161 and a valve seat 162, and a mixing chamber 164 for mixing the fuel with the air located downstream from the nozzle hole 163. The air is introduced into the mixing chamber 164 via an air inlet 165, mixed with the measured fuel in the mixing chamber 164, and supplied into the cylinder via an nozzle hole 166. (b) in Fig. 10 shows the case where a fuel injection valve capable of producing a fuel spray which is resistant to deformation caused by pressure changes is used. When the second fuel is injected, the pressure in the combustion chamber has already been raised by the first combustion. With this fuel injection valve, the spray of the second fuel is less affected by the pressure in the combustion chamber, so that the spray having a shape similar to the spray shape of the first injected fuel can be provided. In this way, an utilization rate of the residual oxygen in the combustion chamber can be increased and the unburned HC can be reduced without reduction in size of the fuel spray, so that as in the case of (a), the catalyst can be activated by the temperature rising of the exhaust gas while reducing the unburned HC and smoke.

An example of the injection valve 170 is shown in Fig. 17C. The injection valve 170 has a tip portion of a nozzle hole 171 cut stepwise 172 in the center of the nozzle hole 171 and mounted in such a manner that the cut side 173 faces the plug. An engine having the injection valve 170 configured in such a manner mounted thereon is shown in Fig. 17A. In this engine, the fuel spray is deflected toward the plug as shown, and penetration is short and an amount of the fuel is small on the side of the piston. The cross-section of the fuel spray taken along the line XVIIB-XVIIB is shown in Fig. 17B. The center line is the line representing the cut face produced by cutting the nozzle hole stepwise 172.

Such a spray has an advantage that it is resistant to deformation even if the pressure in the combustion chamber is high because the pressure is the same inside and outside the spray.

Furthermore, a description will be made of a method for allowing the catalyst to be activated by the temperature rising of the exhaust gas while reducing the unburned HC and smoke by controlling the second fuel injection even if the second fuel injection occurs during the early stage in the expansion stroke. Fig. 11 is an optimum fuel injection method in which the second fuel injection occurs during the early stage in the expansion stroke. More specifically, the method is a method in which the second injected fuel in the first combustion control before the temperature of the catalyst reaches Tc is divided and injected two or more times. By dividing and injecting the second injected fuel two or more times, the utilization rate of the residual oxygen is increased as described with reference to (b) of Fig. 10, so that the catalyst can be activated by the temperature rising of the exhaust gas while reducing the unburned HC and smoke.

Next, an optimum second combustion control method will be described. The second combustion control mentioned here refers to the method in which the second fuel injection occurs during the middle stage in the expansion stroke or later as shown in Fig. 11. As described with reference to Fig. 3, the temperature of the catalyst has reached 250°C to 300°C when the second combustion control is started. The unburned HC after that begins reaction in the catalyst, and the calorific value is largely affected by the amount of the residual oxygen. If the amount of the residual oxygen in the exhaust gas isn't enough for the amount of the unburned HC exhausted from the combustion chamber, the unburned HC burns incompletely in the catalyst, and is discharged to the exhaust pipe on the downstream side of the catalyst. Therefore, in this embodiment, the pulse width of the second fuel injection is set on the basis of the concentration of oxygen in the exhaust gas. In particular, as shown in Fig. 12, the pulse width of the second fuel injection is increased as the concentration of oxygen in the exhaust gas becomes higher. Thus, the fuel corresponding to the amount of the residual oxygen can be supplied to the catalyst, and the unburned HC can surely be burnt in the catalyst. In the case where there is no choice other than setting the A/F of the main combustion rich due to low water temperature, the fuel injection valve capable of separately controlling the air and the fuel as described with reference to (a) of Fig. 10 is preferably applied to supply only the air to the combustion chamber during the exhaust stroke, thereby ensuring the amount of oxygen in the exhaust gas corresponding to the amount of fuel required for activating the catalyst.

The configuration and combustion control method as described above enable the time required for activating the catalyst to be substantially reduced in comparison with a conventional configuration and method.

During the operation period from a cranking to the start of the first combustion control, however, the catalyst is not activated, and therefore, the unburned HC exhausted from the combustion chamber is discharged into the atmosphere without being cleaned up.

Therefore, according to the present invention, in addition to the combustion control method for reducing the time required for activating the catalyst in the cylinder injection type internal combustion engine, there is provided an optimum cylinder injection type internal combustion engine for providing the reduction of the unburned HC to be exhausted from the combustion chamber during the operation period from the cranking to the start of the first combustion control.

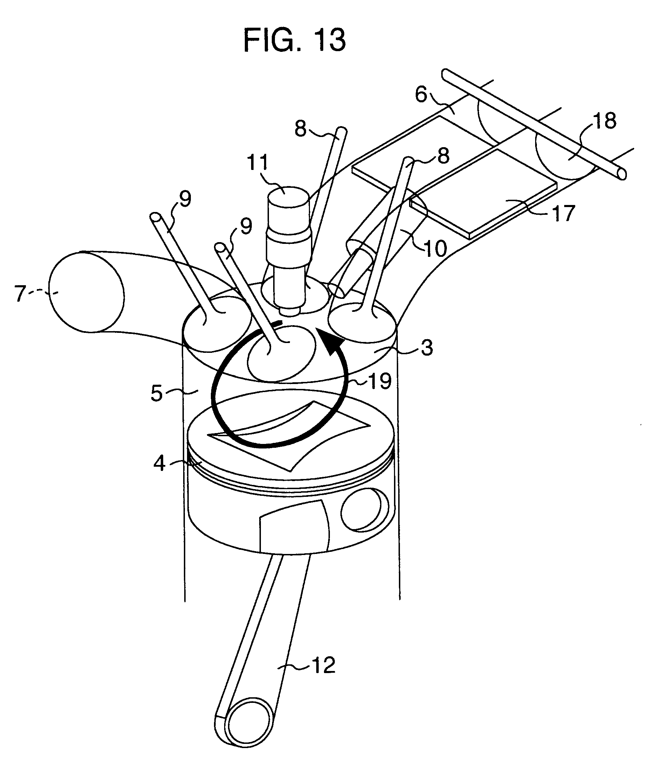

Fig. 13 is a schematic perspective view of an optimum cylinder injection type internal combustion engine according to an embodiment of the present invention. This engine has essentially the same configuration as that shown in Fig. 1, except that distributor plates 17, each of which divides the intake flow path of the intake pipe 6 into two parts, that is, upper and lower parts, are provided in the respective intake pipes 6 on the upstream side of the intake valves 8, and flow dividing valves 18 are disposed upstream from the distributor plates 17. The flow dividing valve 18 is arranged in such a manner that the position of a valve element is changed within an angle range of 90° from a vertical position to a horizontal position by rotation of a valve stem. The velocity of a tumble flow 19 generated in the combustion chamber 5 is adjusted by opening and closing the flow dividing valve 18. Furthermore, a curved groove is formed on the top face of the piston 4 for rectifying the tumble flow 19 and enhancing the preservability thereof.

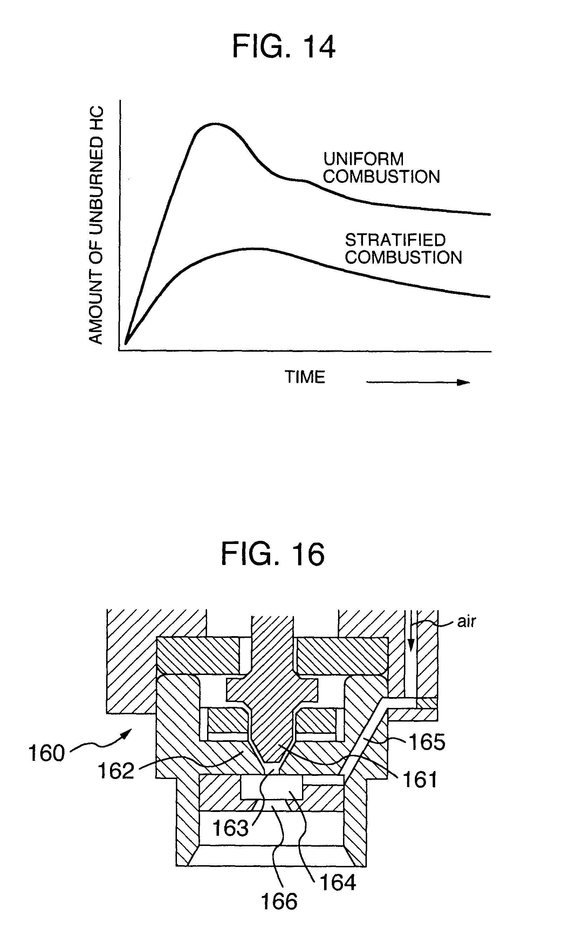

With the cylinder injection type internal combustion engine having such a configuration, the fuel injected from the fuel injection valve 10 is carried to the vicinity of the ignition plug by the tumble flow 19 generated in advance in the combustion chamber, and the stratified combustion can be provided at the time of cranking. As a result, as shown in Fig. 14, an amount of the exhausted unburned HC can be substantially reduced compared with the uniform combustion. During the period before the number of revolution of the engine is increased enough, an amount of the air taken into the combustion chamber is small, so that the fuel injection valve which injects a part of the fuel spray toward the ignition plug is preferably used.

As seen from the above description, the present invention provides a substantial reduction of the time required for activating the catalyst by switching over the combustion control based on the temperature of the catalyst between the first combustion control for raising the exhaust gas temperature while reducing the unburned HC and smoke and the second combustion control for supplying the unburned HC to the catalyst to burn the unburned HC in the catalyst.

In addition, according the present invention, the stratified combustion can be provided at the time of starting, so that the unburned HC to be exhausted during the operation period from the cranking to the combustion control for the catalyst activation can be reduced.

## Claims

1. A cylinder injection type internal combustion engine (1), comprising:
a fuel injection valve (10, 160, 170) for directly injecting a fuel into a cylinder; and
a catalyst (13a, 13b) to be activated by HC in an exhaust gas,
wherein a first combustion control pattern of the engine (1) before said catalyst (13a, 13b) satisfies a temperature condition for enabling activation of the catalyst (13a, 13b) with the HC in the exhaust gas is different from a second combustion control pattern of the engine (1) after that.

2. The cylinder injection type internal combustion engine (1) according to claim 1, wherein said fuel injection valve (10, 160, 170) has an air inlet (165) provided downward from a fuel measuring section and is configured to inject an air-fuel mixture produced by mixing the air supplied from said inlet (165) and the fuel into the cylinder.

3. The cylinder injection type internal combustion engine (1) according to claim 1, wherein said injection valve (10, 160, 170) has a fuel spray pattern having low rate of deformation for pressure changes in the cylinder.

4. A method for controlling combustion of a cylinder injection type internal combustion engine (1) at the time of starting, the internal combustion engine (1) comprising a catalyst (13a, 13b) to be activated by unburned HC, wherein a combustion control pattern in which an amount of the exhausted unburned HC is small and an exhaust gas temperature is high is performed until said catalyst (13a, 13b) reaches a temperature which enables the unburned HC in the exhaust gas to be cleaned up, and another combustion control pattern in which the exhaust gas containing the unburned HC to be supplied to the catalyst (13a, 13b) is exhausted is performed after said catalyst (13a, 13b) reaches the temperature which enables the unburned HC in the exhaust gas to be cleaned up.

5. A method for controlling combustion of a cylinder injection type internal combustion engine (1) at the time of starting, the cylinder injection type internal combustion engine (1) comprising a fuel injection valve (10, 160, 170) for directly injecting a fuel into a cylinder, and a catalyst (13a, 13b) to be activated by unburned HC, wherein there are at least two combustion control patterns for activating rapidly said catalyst (13a, 13b), and said combustion control patterns are switched over based on a temperature of the catalyst (13a, 13b).

6. A method for controlling combustion of a cylinder injection type internal combustion engine (1) at the time of starting, the engine (1) comprising a fuel injection valve (10, 160, 170) for directly injecting a fuel into a cylinder, and a catalyst (13a, 13b) to be activated by unburned HC, and having a function of injecting the fuel two times during a combustion stroke and a function of switching over combustion control pattern based on a cooling water temperature of the engine (1), wherein until a temperature of the catalyst (13a, 13b) reaches a predetermined value, if the water temperature is lower than a predetermined temperature, the fuel is injected one time during an intake stroke and an ignition timing is retarded near a top dead center, and if the water temperature is higher than the predetermined temperature, the fuel is first injected during a compression stroke and the next injection is performed during an expansion stroke.

7. A method for controlling combustion of a cylinder injection type internal combustion engine (1) at the time of starting, the engine (1) comprising a fuel injection valve (10, 160, 170) for directly injecting a fuel into a cylinder and a catalyst to be activated by unburned HC, wherein until a temperature of said catalyst (13a, 13b) reaches a predetermined value, said injection valve (10, 160, 170) injects the fuel two times during a compression stroke and during the first half of an expansion stroke, and after the temperature of said catalyst (13a, 13b) reaches the predetermined value, said injection valve (10, 160, 170) injects the fuel two times during the compression stroke and during the latter half of the expansion stroke.

8. The method for controlling combustion of a cylinder injection type internal combustion engine (1) at the time of starting according to claim 7, wherein the injection which occurs during the first half of the expansion stroke is further divided into two injections.

9. The method for controlling combustion of a cylinder injection type internal combustion engine (1) at the time of starting according to claim 4, wherein the fuel is injected during the compression stroke and a stratified combustion operation is conducted at the time of cranking.

10. The method for controlling combustion of a cylinder injection type internal combustion engine (1) at the time of starting according to claim 5, wherein the fuel is injected during the compression stroke and a stratified combustion operation is conducted at the time of cranking.

11. The method for controlling combustion of a cylinder injection type internal combustion engine (1) at the time of starting according to claim 6, wherein the fuel is injected during the compression stroke and a stratified combustion operation is conducted at the time of cranking.

12. The method for controlling combustion of a cylinder injection type internal combustion engine (1) at the time of starting according to claim 7, wherein the fuel is injected during the compression stroke and a stratified combustion operation is conducted at the time of cranking.

13. The method for controlling combustion of a cylinder injection type internal combustion engine (1) at the time of starting according to claim 8, wherein the fuel is injected during the compression stroke and a stratified combustion operation is conducted at the time of cranking.

14. A method for controlling combustion of a cylinder injection type internal combustion engine (1) at the time of starting, the cylinder injection type internal combustion engine (1) comprising a fuel injection valve (10, 160, 170) for directly injecting a fuel into a cylinder, and a catalyst (13a, 13b) for cleaning up an exhaust gas in an exhaust pipe (7), wherein there are two types of combustion control patterns for rapidly activating the catalyst (13a, 13b), and after a temperature of the catalyst (13a, 13b) reaches a predetermined value, combustion is controlled with a combustion control pattern for activating the catalyst (13a, 13b), and in the combustion control, the fuel is injected two times during a compression stroke and expansion stroke.

15. A method for controlling combustion of a cylinder injection type internal combustion engine (1) at the time of starting, the engine (1) comprising a fuel injection valve (10, 160, 170) for directly injecting a fuel into a cylinder, and a catalyst (13a, 13b) for cleaning up an unburned HC in an exhaust pipe (7), wherein when a temperature of the catalyst (13a, 13b) is equal to or lower than a predetermined value, a first fuel injection occurs during a compression stroke and second fuel injection occurs during an early stage in an expansion stroke, and after the temperature of the catalyst (13a, 13b) reaches the predetermined value, said second fuel injection occurs during a middle stage in the expansion stroke or later.

16. The method for controlling combustion of a cylinder injection type internal combustion engine (1) at the time of starting according to claim 7, wherein the second fuel injection is changed in accordance with a concentration of oxygen in the exhaust gas.

17. The method for controlling combustion of a cylinder injection type internal combustion engine (1) at the time of starting according to claim 14, wherein the second fuel injection is changed in accordance with a concentration of oxygen in the exhaust gas.
